Europäisches Patentamt

European Patent Office

Office européen des brevets

(11) Publication number: **0 120 603**
**B1**

# EUROPEAN PATENT SPECIFICATION

(45) Date of publication of patent specification: **07.09.88**

(21) Application number: **84301204.8**

(22) Date of filing: **24.02.84**

(51) Int. Cl.⁴: **H 01 R 4/70,** H 02 G 15/18,
F 16 L 47/00

(54) Cable branch-off and method of forming such.

(30) Priority: **25.02.83 GB 8305311**

(43) Date of publication of application:
**03.10.84 Bulletin 84/40**

(45) Publication of the grant of the patent:
**07.09.88 Bulletin 88/36**

(84) Designated Contracting States:
**AT BE CH DE FR GB IT LI NL SE**

(56) References cited:
**EP-A-0 040 957**
**EP-A-0 050 995**
**EP-A-0 052 241**
**DE-A-2 539 275**
**DE-B-2 413 623**
**GB-A-1 604 984**
**GB-A-2 019 120**

(73) Proprietor: **N.V. RAYCHEM S.A.**
**Diestsesteenweg 692**
**B-3200 Kessel-lo (BE)**

(72) Inventor: **Franckx, Joris Rene Isabella**
**Halmenhoek 7**
**B-2820, Bonheiden (BE)**

(74) Representative: **Benson, John Everett et al**
**Raychem Limited Intellectual Property Law**
**Department Swan House 37-39, High Holborn**
**London WC1 (GB)**

Courier Press, Leamington Spa, England.

## Description

This invention relates to recoverable articles and their use in sealing substrates such as cables and supply lines.

Recoverable articles are now widely used in many areas where sealing is required because of the ease with which they can be installed and the reliability of seal that can be produced.

A recoverable article is an article the dimensional configuration of which may be made substantially to change when subjected to some treatment. Heat-recoverable articles, which recover when heated, are particularly preferred since they are simple to produce and the means for causing recovery is widely available. Usually these articles recover, towards an original shape from which they have previously been deformed but the term "recoverable", as used herein, also includes an article which adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962, 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as an inner tubular member, which, upon heating weakens and thus allows the elastomeric member to recover.

Recoverable articles find many applications, especially in the connection and termination of wires, cables and pipes. The article is slid over or wrapped around the wire, cable or pipe and recovered into sealing engagement. Problems may, however, arise when two or more such substrates have to be sealed at one position. This problem, which is known as branch-off, may occur at the outlet of a recoverable article used for example in the production of a telecommunications splice case.

One effective solution for tubular sleeves has been to use moulded heat-shrinkable parts provided with preformed outlets for individual supply lines or other substrates. However, in general such moulded parts have to be made to suit a specific application, and are not therefore sufficiently versatile. An alternative technique is to use a mastic tape to seal the gap between the supply lines so that on recovery of an overlying tubular sleeve a proper encapsulation is formed. However, the use of such a tape requires skill and the mastic may degrade the overal performance of some products with which one may wish to use it.

These problems have been overcome by the use of a clip which is positioned at an end of a recoverable sleeve between the diverging substrates; the technique is highly versatile and is able to provide excellent sealing.

The use of a clip to form a plurality of conduits at an end of a recoverable sleeve is disclosed in UK Patent specification 2 019 120. This earlier patent specification recites the following method:

a. positioning a clip having at least two elongate legs on the outer surface of the heat-shrinkable sleeve at an end thereof so as to form at least two terminal conduits;

b. positioning the substrates within the conduits; and

c. applying heat so as to effect shrinkage and to form the desired seal.

In its simplest form the clip disclosed in GB 2 019 120 is U-shaped and the two legs are separated by a distance which is substantially equal to twice the thickness of the sleeve material. The clip therefore brings together between the substrates circumferentially separated portions of the sleeve. More elaborate clips are also disclosed, for example a three legged clip where an inner leg is coated with a hot-melt adhesive which lies within the sleeve between the diverging substrates. The circumferentially separated portions of sleeve that are brought together will not now touch each other but remain slightly apart by a distance equal to the width of the inner leg, which varies from about 4-10mm for branch-off clips at present used in the telecommunications industry.

A development of such a clip is disclosed in GB 1 604 984 where provision is made to accommodate slack in a sleeve where the substrates it encloses are far apart and cannot be moved together. An example of this is lead boxes for telecommunications cable junctions where the separation between the diverging cables may be 30mm or more.

Where such boxes are enclosed by recoverable sleeves for environmental protection it may be difficult to seal the gap between the diverging cables and the sleeve. GB 1 604 984 solves this problem by using a fork member (rather than a simple clip) through the prongs of which are threaded the two thicknesses of an end portion of the sleeve. The two thicknesses of the sleeve are thus held in contact with each other over this distance of say, 30mm or more.

We have now designed a branch-off clip which produces surprisingly good results especially for more complex cable configurations. The clip is used at an end of a recoverable sleeve to produce a plurality of conduits, but does not bring circumferentially opposing portions of the sleeve closely together.

The present invention provides an enclosure for a branch-off between at least two substrates which comprises:

(a) a recoverable sleeve which can surround the branch-off; and

(b) a clip which comprises at least two outer legs and one inner leg which has an aspect ratio (as herein defined) of at least, 4:l, wherein the clip can be positioned on an open end of the sleeve with the outer legs outside the sleeve and the inner leg inside the sleeve, characterised in that the width of the inner leg is such that positioning of the clip forms at least two terminal conduits, with at least two substrates in one conduit, aligned substantially parallel to the width of the clip, and at least two substrates in the other conduit, aligned substantially parallel to the width of the clip, and at least after recovery, portions of the sleeve that pass between the inner leg and each of said outer legs are substantially planar.

The invention further provides an enclosure for a branch-off between at least two substrates, which comprises:

(a) a recoverable sleeve which can surround the branch-off; and

(b) a clip which comprises at least two outer legs and one inner leg, the outer legs and inner leg being so arranged that the clip can be positioned on an open end of the sleeve with the outer legs outside the sleeve and the inner leg inside the sleeve, and the width of the inner leg being such that at least two terminal conduits are formed charaterised at least after recovery, by portions of the sleeve that pass between the inner leg and each of said outer legs being substantially planar, wherein at least part of the surface of the inner leg of the clip comprises an adhesive or sealant.

The invention also provides a method of forming a branch-off between a recoverable sleeve and at least two substrates, which comprises:

(a) positioning a clip having at least two outer elongate legs and one inner elongate leg, on an open end of a recoverable sleeve with the outer legs outside the sleeve and the inner legs inside the sleeve such that the inner leg divides the sleeve into at least two conduits characterised in that at least after recovery, portions of the sleeve that pass between the inner leg and each of said outer legs are substantially planar, wherein at least part of the surface of the inner leg of the clip comprises an adhesive or sealant;

(b) positioning the substrate within the conduits; and

(c) recovering the sleeve into engagement with substrates to form the desired seal.

The invention still further provides a method of forming a branch-off between a recoverable sleeve and at least four substrates, which comprises:

(a) positioning a clip, having at least two outer elongate legs and one inner elongate leg having an aspect ratio of at least 4:l, on an open end of a recoverable sleeve with the outer legs outside the sleeve and the inner legs inside the sleeve such that the inner leg divides the sleeve into at least two conduits, characterised in that at least after recovery, portions of the sleeve that pass between the inner leg and each of said outer legs are substantially planar;

(b) positioning at least two substrates within one conduit aligned substantially parallel to the width of the clip, and at least two substrates within another of the conduits aligned substantially parallel to the width of the clip; and

(c) recovering the sleeve into engagement with substrates to form the desired seal.

EP-A-50995, cited in the examination report, discloses a branch-off at an end of a heat-recovered sleeve, which employs a thermally-conductive member having fin-shaped protruberances by means of which heat can be conducted into the crutch region to activate a sealant.

Where reference is made to the width of the inner leg or to its aspect ratio we refer to that part of the inner leg adjacent the end of the sleeve when installed, and aspect ratio is here defined to mean the ratio between the width and thickness of the inner leg at that part.

In the method of the invention positioning of the clip and positioning of the substrates can be carried out in either order or substantially simultaneously. In general, it will be preferred first to install a sleeve around a branch-off so that the substrates take up at least approximately their desired positions in the sleeve, and then position the clip.

The way in which positioning the clip forms the conduits in the recoverable sleeve is primarily by dividing the space within the sleeve by means of the inner leg, although some deformation of the sleeve by bringing together circumferentially opposed portions thereof may be desirable. The reason that some deformation may be desirable is that the resulting forces in the sleeve on recovery help to retain the clip in position, and that the amount of any adhesive or sealant required in the branch-off region is thereby reduced. The amount of deformation required will depend on the configuration of the branch-off and for smaller cables and branch-off configurations such as four-out and six-out we have surprising found that the clip of the invention can produce an excellent seal with no leak paths without the necessity of causing the recoverable sleeve to be deformed to follow the surfaces of all of the cables.

The invention is particularly applicable to sealing branch-offs between cables having a double jacket, although the enhanced benefits can be obtained on single-jacketed cables by using some form of spacer to simulate a second jacket. Some telecommunications cables, for example, comprise a number of pairs of conductor wires enclosed in a first jacket of polyethylene and a second, outer, jacket of spirally wound polyethylene-coated steel wires. The first jacket gives the basic moisture protection and electrical insulation, and the outer jacket provides mechanical protection and reinforcement. A problem arises when such cables are to be spliced due to the irregular surface of the spirally wound outer jacket: the splice case must extend from one outer jacket across the splice to the other outer jacket in order to provide axial strength, but the usual technique of providing an environmental seal between the ends of the splice case and the outer jackets cannot be relied on because of potential leak paths between the strands of outer jacket. The solution is to strip back the inner jacket a sufficient distance to allow the conductors to be spliced, and to strip back the outer jacket a greater distance to leave a length of inner jacket exposed. In this way the splice case can bond both to the outer jacket (to provide axial strength) and to the inner jacket (to provide an environmental seal).

Since the inner jacket is of smaller diameter than the outer jacket, spaces will remain around the inner jackets when the outer jackets are bunched tightly together. These spaces allow sufficient flow of adhesive around the inner jacket for formation of a good environmental seal.

The branch-off to be sealed will be described in terms of a six-out configuration, although other numbers of cables may be accommodated using the enclosure of the invention. The six cables are preferably arranged as two rows of three, one above the other, with the inner leg of the clip between the rows and in the same plane. A recoverable sleeve surrounds the cables with the cables emerging from an end of the sleeve such that the outer legs of the clip lie outside the sleeve. The outer legs may cause the sleeve to be deformed to a slight extent between the two rows of cables. In general some sealing material, such as a hot-melt or other heat-activatable adhesive or a mastic, will be required in the branch-off region. This sealing material may be provided by the inner leg of the clip, by an internal coating on the recoverable sleeve, by separate application, or by two or more of these techniques. In the past, problems have been encountered in ensuring proper activation of heat-activatable sealing materials in complex branch-offs such as six-out. We have found, however, that the clip of the present invention allows good heat transfer from the outer legs and the bridge portion of the clip to the inner leg (which preferably comprises a sealing material). This allows good sealing between the two rows of cables to be achieved. Sealing between the sleeve and the cables can be provided by a separately applied adhesive or by adhesive on the sleeve, the heat required for activation being obtained by conduction through the sleeve.

The sleeve is preferably heat-recoverable, especially when sealing is achieved by means of a heat-activatable sealing material since a single heating step can cause both recovery and formation of the desired environmental seal.

. It may be found desirable to provide an inner leg which extends further than the outer legs, although the size of the outer legs will depend in part on the extent to which they must be able to absorb heat for transmission into the branch-off region. The reason for the different lengths of legs is that in the present invention the clip may carry out two functions in different places. Firstly the clip defines a plurality of conduits at an end (or end portion) of a recoverable sleeve, and secondly it supplies a sealant material to a region inwardly of the end (or end portion). The plurality of conduits must be formed in order that the sleeve properly grips each cable to provide the desired mechanical strength, and also to restrict the size of the opening of the sleeve to prevent activated sealant material from flowing away. The sealant material is, of course, required for environmental protection. These two functions have hitherto been generally provided at the same region along the cable, and although the reason for their separation in the type of cable discussed is the nature of the outer jacket, it is envisaged that the concept is broadly applicable, an example of another use being the provision of a cable block at an end of a splice case.

Where sealant material is provided on the clip, on the sleeve, or as a separately applied component, we prefer a hot-melt adhesive such as a polyamide, although this is not critical. If desired, sealing materials of different characteristics may be applied to different parts of the assembly, for example to the distal and proximal parts of the inner leg of the clip. A reason for doing this is to match the characteristics of the sealing material to the functions it must perform or the conditions that it will meet. In this respect one could consider an adhesive at the proximal part of the leg as seeing a higher installation temperature, and being required to produce a bond withstanding high axial load, and an adhesive at the distal end remaining cooler and being required merely to seal, perhaps retaining greater flexibility. The effect of temperature however will not be great and it is an advantage of the clip of the invention that, due to its size and shape, much heat can be transferred to a normally inaccessible branch-off region.

The invention is further illustrated with reference to the accompanying drawings, in which:

Figures 1 and 2 show the use of branch-off clips as disclosed in the prior art;

Figure 3 shows a clip according to the present invention;

Figure 4 is a longitudinal cross-section through a branch-off made using the clip of Figure 3;

Figures 5 and 6, a transverse cross-sections taken from figure 4;

Figure 7 shows a modified clip according to the invention; and

Figure 8 shows a splice case sealing a joint between double jacketed cables.

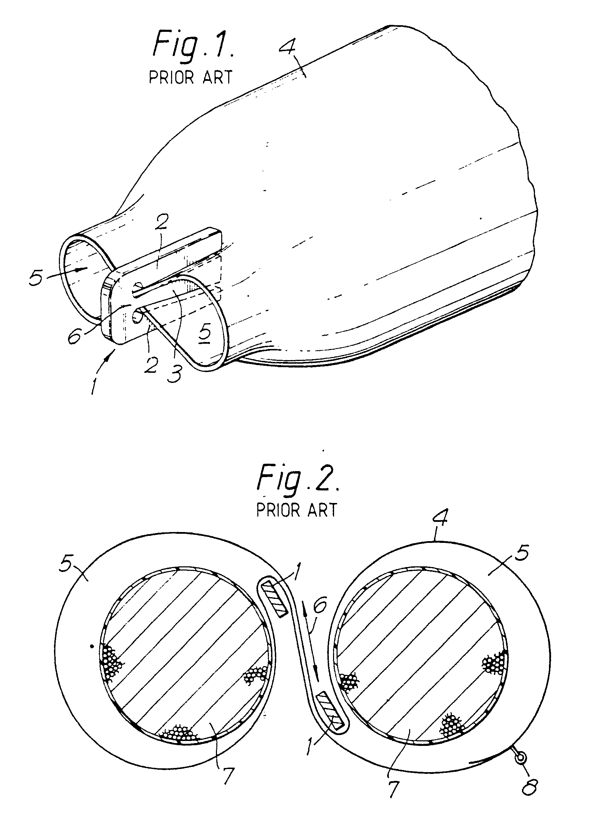

Figures 1 and 2 show certain embodiments of prior art clips 1 used to seal cable branch-offs.

The clip 1 in figure 1 has two outer legs 2 and an inner leg 3 positioned at the end of a recoverable sleeve 4 to form two terminal conduits 5. The clip 1 causes deformation of the sleeve to bring together circumferentially spaced portions thereof at a position 6.

A different design of clip 1 is shown in Figure 2, which is a transverse cross-section at the end of a sleeve 4 surrounding two multi-core cables 7. The sleeve is a wrap-around sleeve, held in the wrapped configuration by a closure means 8. The clip here has only two legs and opposing thicknesses of an end portion of the sleeve are threaded through the legs or prongs of the clip. The two thickesses of the sleeve are thus held in contact with one another over a significant length 6. In each of these prior art designs the sleeve is significally deformed from the simple shape it would take up around the substrates, in order to form the two condutors.

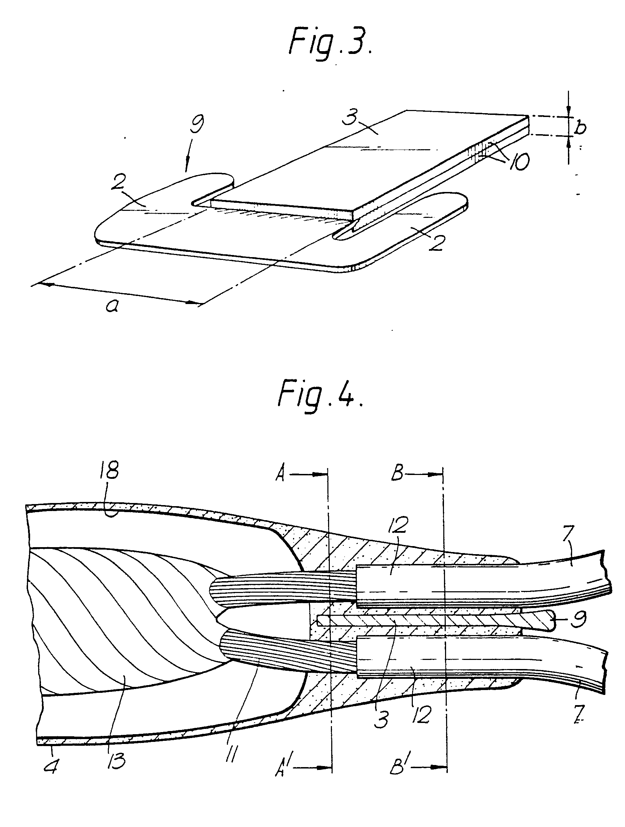

Figure 3 shows a clip 9 of the invention. This clip has an inner leg 3 of significantly different shape from the shape of the legs of Figures 1 and 2. The shape of leg 3 can be characterized in terms of its aspect ratio a/b, which is the ratio between its width (a) at that point where the extremity of the sleeve reaches, to its thickness (b). We are concerned here with the extent to which the clip forms a plurality of terminal conduits by dividing the space within the sleeve rather than by deforming the sleeve, and it is for this reason that (a) is to be measured at a position which will correspond to the end of the sleeve. The inner leg may consist of an adhesive or sealant or may comprise a heat-conducting member coated or otherwise covered with an adhesive or sealant. Alternatively, the inner leg may be have no adhesive or sealant thereon, its function being simply to locate or separate the substrates or to conduct heat to an adhesive or sealant otherwise supplied. The clip 9 shown in figure 3 consists of a heat-conductive member integral with the bridge portion and outer legs 2 and coated with a hot-melt adhesive 10. The size of the clip will of course depend on the number and sizes of the cables involved, but for a branch-off of six cables of 12mm overall diameter an inner leg of width 20-30mm, preferably about 25mm, and of thickness 2-5mm, preferably about 3mm may be regarded as typical.

Figure 4 is a longitudinal cross-section of a splice between two cables 7 which comprise conductors 11 plus cable jacket 12. The splice region 13 is protected by a tape wrapping. A recoverable sleeve 4 is positioned around the branch-off and two conduits are formed at an end of the sleeve by a clip 9. The inner leg of the clip 3 extends between the cables past the end of the cable jackets 12. The outer legs of the clip (which are not shown in this cross-section) are shorter than the inner leg and do not extend past the ends of the jackets 12.

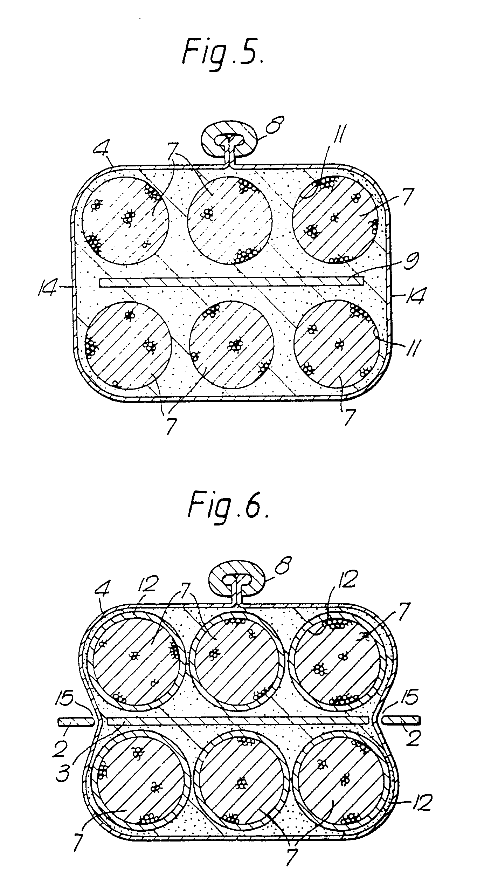

Figures 5 and 6 show transverse cross-sections taken from figure 4 at positions AA' and BB' respectively. At position AA' there is considerable separation between the conductors since they are smaller than the jackets which determine their relative positions. Adhesive provided on the inner surface of the sleeve and from from the inner leg 3 of the clip 9 is able to flow around the conductors to provide good environmental sealing and to act as a cable block. Since the outer legs do not extend as far as position AA' there will be no deformation of the sleeve at this position, as indicated at 14 in figure 5.

At position BB' as shown in figure 6 the situation is slightly different. There is very little clearance between the cable jackets since they are forced together and against the inner leg 3 by the sleeve as it recovers. To some extent at least this serves as a dam to prevent or restrict adhesive flow out of the end of the sleeve on recovery. Since the outer legs 2 extend to position BB' there may be some deformation in the sleeve as shown at 15. A certain amount of deformation may be desired in order to help retain tbe clip and to reduce the amount of adhesive required. However, it can be seen that the extent of deformation is not substantial and the sleeve is not caused to follow a significant portion of the circumference of each cable. The adhesive between the upper and lower rows of cables as drawn is preferably supplied by the inner leg 3, and activated by conduction via the outer legs 2 or by the bridge portion, and adhesive around the outside of the group of cables is preferably supplied as a coating on the sleeve 4, and activated by heat supplied for example by a torch or hot-air gun.

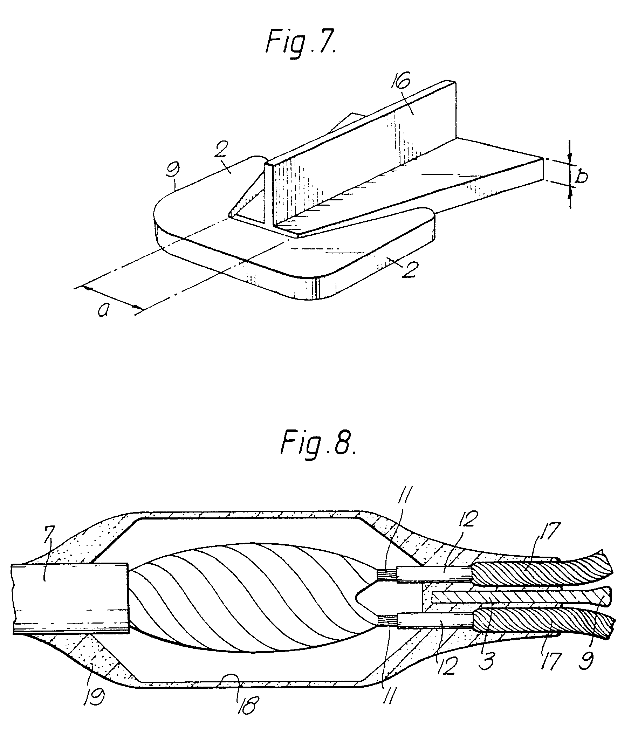

A modified clip is shown in Figure 7. The inner leg 3 increases in width towards its distal end, and has a fin 16 for supplying adhesive and heat between the cables that lie on its upper surface. A similar fin (not shown) is provided on its lower surface. Such a clip would be used for a four cable branch-off, especially for large cables. The design could be varied for the six-out configuration shown in the earlier drawings, or for other cable configurations.

Figure 8 shows a cable splice of 1 in 6 out configuration.

The six cables leaving the splice are grouped as two sets of 3 as shown in Figures 5 and 6, only one cable of each set being visible. The cables here comprise conductors 11 surrounded first by a polyethlene jacket 12 and an outer reinforcement 17 of polyethylene-coated steel wires spirally wound around the first jacket. The relation here between the reinforcement 17 and the first jacket 12 is analogous to that between the first jacket 12 and the conductors 11 in figure 4. Here, however, a cable block is not being formed, but instead a joint to the reinforcement is being made at one position for mechanical strength, and a seal is being made at another position for environmental protection. The splice bundle is mechanically protected by a liner 18 which may also act as a heat barrier or a water-vapour barrier.

The arrangement of figure 8 is particularly useful for cables whose first jacket is 6-10 mm, especially about 8mm,- in diameter, and whose reinforcement is from 10-15, especially about 12mm in diameter.

## Claims

1. An enclosure for a branch-off between at least four substrates which comprises:

(a) a recoverable sleeve (4) which can surround the branch-off; and

(b) a clip (9) which comprises at least two outer legs (2) and one inner leg which has an aspect ratio (as herein defined) of at least 4:1, wherein the clip can be positioned on an open end of the sleeve with the outer legs outside the sleeve and the inner leg inside the sleeve, characterised in that the width of the inner leg is such that positioning of the clip forms at least two terminal conduits, with at least two substrates in one conduit, aligned substantially parallel to the width of the clip, and at least two substrates in the other conduit, aligned substantially parallel to the width of the clip, and at least after recovery, portions of the sleeve that pass between the inner leg and each of said outer legs are substantially planar.

2. An enclosure for a branch-off between at least two substrates, which comprises:

(a) a recoverable sleeve (4) which can surround the branch-off; and

(b) a clip (9) which comprises at least two outer legs (2) and one inner leg (3), the outer legs and inner leg being so arranged that the clip can be positioned on an open end of the sleeve with the outer legs outside the sleeve and the inner leg inside the sleeve, and the width of the inner leg being such that at least two terminal conduits are formed with characterized at least after recovery, by portions of the sleeve that pass between the inner leg and each of said outer legs being substantially planar, wherein at least part of the surface of the inner leg of the clip comprises an adhesive or sealant.

3. An enclosure according to any preceding claim, in which the sleeve is heat-recoverable.

4. An enclosure according to any preceding claim, in which the sleeve is a wrap-around sleeve.

5. An enclosure according to any preceding claim, in which the sleeve has an adhesive or sealant on an internal surface thereof, which adhesive or sealant is preferably heat-activatable.

6. An enclosure according to any preceding claim, which additionally comprises a liner which can surround and mechanically protect the substrates and over which the sleeve may be recovered.

7. An enclosure according to any preceding claim in which the aspect ratio of the inner leg of the clip is from 6:1 to 10:1.

8. An enclosure according to any preceding claim, in which the inner leg is longer than the outer legs.

9. A branch-off between at least two substrates when enclosed by an enclosure according to any preceding claim.

10. A branch-off according to claim 9, in which the substrates are telecommunications cables.

11. A branch-off according to claim 10, in which the cables are double jacketed cables.

12. A branch-off according to claim 10 or 11, in which the cables have an overall diameter of from 10-15mm.

13. A method of forming a branch-off between a recoverable sleeve (4) and at least four substrates, which comprises:

(a) positioning a clip (9), having at least two outer elongate legs (2) and one inner elongate leg (3) having an aspect ratio of at least 4:1, on an open end of a recoverable sleeve with the outer legs outside the sleeve and the inner legs inside the sleeve such that the inner leg divides the sleeve into at least two conduits, characterised in that at least after recovery, .portions of the sleeve that pass between the inner leg and each of said outer legs are substantially planar;

(b) positioning at least two substrates within one conduit aligned substantially parallel to the width of the clip, and at least two substrates within another of the conduits aligned substantially parallel to the width of the clip; and

(c) recovering the sleeve into engagement with substrates to form the desired seal.

14. A method of forming a branch-off between a recoverable sleeve (4) and at least two substrates, which comprises:

(a) positioning a clip (9), having at least two outer elongate legs (2) and one inner elongate leg (3), on an open end of a recoverable sleeve with the outer legs outside the sleeve and the inner legs inside the sleeve such that the inner leg divides the sleeve into at least two conduits with characterised in that at least after recovery, portions of the sleeve that pass between the inner leg and each of said outer legs are substantially planar, wherein at least part of the surface of the inner leg of the clip comprises an adhesive or sealant;

(b) positioning the substrate within the conduits; and

(c) recovering the sleeve into engagement with substrates to form the desired seal.

15. A method according to claim 13 or 14, in which the sleeve is heat-recoverable and step (c) comprises heating the sleeve.

16. A method according to any one of claims 13 to 15, in which the sleeve has a sealant or adhesive on an internal surface thereof, and if necessary the method additionally comprises (d) activating the sealant or adhesive.

17. A method according to claim 15 and 16, in which the sealant or adhesive is heat-activatable and steps (c) and (d) comprise heating the sleeve.

18. A method according to any of claims 13-17, in which the substrates are positioned within the sleeve before positioning of the clip.

19. A method according to any of claims 13-18, in which the substrates are telecommunications cables.

20. A method according to claim 19, in which the cables are double jacketed cables.

21. A method according to claim 19 or 20, in which the cables have an overall diameter of from 10-15mm.

## Patentansprüche

1. Umhüllung für eine Kabelabzweigung zwischen wenigstens vier Substraten, enthaltend:

(a) eine rückstellfähige Muffe (4), die die Abzweigung umschließen kann, und

(b) eine Klammer (9), enthaltend wenigstens zwei äußere Schenkel (2) und einen inneren Schenkel, der ein Streckenverhältnis (wie hierin erläutert) von wenigstens 4:1 hat, wobei die Klammer an einem offenen Ende der Muffe mit den äußeren Schenkeln außerhalb und dem inneren Schenkel innerhalb der Muffe angebracht werden kann, dadurch gekennzeichnet, daß die Breite des inneren Schenkels derart ist, daß durch das Anbringen der Klammer wenigstens zwei endständige Kanäle gebildet werden, mit wenigstens zwei Substraten in einem Kanal, die im wesentlichen parallel zur Breite der Klammer ausgerichtet ist und wenigstens zwei Substraten in dem anderen Kanal, die im wesentlichen parallel zur Breite der Klammer ausgerichtet ist, und wenigstens nach Rückstellung Teile der Muffe, die zwischen dem inneren Schenkel und jedem der äußeren Schenkel verlaufen, im wesentlichen eben sind.

2. Umhüllung für eine Kabelabzweigung zwischen wenigstens zwei Substraten, enthaltend:

(a) eine rückstellfähige Muffe (4), die die Abzweigung umschließen kann, und

(b) eine Klammer (9), enthaltend wenigstens zwei äußere Schenkel (2) und einen inneren Schenkel (3), wobei äußere Schenkel und innerer Schenkel derart angeordnet sind, daß die Klammer an einem offenen Ende der Muffe mit den äußeren Schenkeln außerhalb und dem inneren Schenkel innerhalb der Muffe angebracht werden kann, und die Breite des inneren Schenkels derart ist, daß wenigstens zwei endständige Kanäle gebildet werden, dadurch gekennzeichnet, daß wenigstens nach Rückstellung Teile der Muffe, die zwischen dem inneren und jedem der äußeren Schenkel verlaufen, im wesentlichen eben sind, wobei die Oberfläche des inneren Schenkels der Klammer wenigstens teilweise einen Klebstoff oder ein Dichtungsmaterial aufweist.

3. Umhüllung nach einem der vorangegangenen Ansprüche, worin die Muffe wärmerückstellfahig ist.

4. Umhüllung nach einem der vorangegangenen Ansprüche, worin die Muffe eine Umschlagmuffe ist.

5. Umhüllung nach einem der vorangegangenen Ansprüche, worin die Muffe auf einer inneren Oberfläche einen Klebstoff oder ein Dichtungsmaterial aufweist, die vorzugsweise wärmeaktivierbar sind.

6. Umhüllung nach einem der vorangegangenen Ansprüche, worin sie zusätzlich eine Einlage enthält, die die Substrate umschließen und mechanisch schützen kann und über die die Muffe rückgestellt werden kann.

7. Umhüllung nach einem der vorangegangenen Ansprüche, worin das Streckenverhaltnis des inneren Schenkels der Klammer 6:1 bis 10:1 beträgt.

8. Umhüllung nach einem der vorangegangenen Ansprüche, worin der innere Schenkel länger ist als die äußeren Schenkel.

9. Kabelabzweigung zwischen wenigstens zwei Substraten, die durch eine Umhüllung nach einem der vorangegangen Ansprüche umhüllt ist.

10. Kabelabzweigung nach Anspruch 9, worin die Substrate Telekommunikationskabel sind.

11. Kabelabzweigung nach Anspruch 10, worin die Kabel eine Doppelummantelung aufweisen.

12. Kabelabzweigung nach Ansprüchen 10 oder 11, worin die Kabel einen Außendurchmesser von 10-15 mm aufweisen.

13. Verfahren zur Herstellung einer Abzweigung zwischen einer rückstellfähigen Muffe (4) und wenigstens vier Substraten, enthaltend:

(a) Anbringen einer Klammer (9), die wenigstens zwei langgestreckte äußere Schenkel (2) und einen langgestreckten inneren Schenkel (3) mit einem Streckenverhältnis von wenigstens 4:l aufweist, an einem offenen Ende einer rückstellfähigen Muffe, wobei sich die äußeren Schenkel außerhalb der Muffe und der innere Schenkel innerhalb der Muffe befinden, so daß der innere Schenkel die Muffe in wenigstens zwei Kanäle teilt, dadurch gekennzeichnet, daß wenigstens nach Rückstellung Teile der Muffe, die zwischen innerem Schenkel und jedem äußeren Schenkel verlaufen, im wesentlichen eben sind;

(b) Anbringen wenigstens zweier Substrate innerhalb eines Kanals, der im wesentlichen parallel zur Breite der Klammer ausgerichtet ist, und wenigstens zweier Substrate innerhalb eines anderen Kanals, der im wesentlichen parallel zur Breite der Klammer ausgerichtet ist; und

(c) Rückstellung der Muffe in Berührung mit den Substraten, um die gewünschte Dichtung herzustellen.

14. Verfahren zur Herstellung einer Abzweigung zwischen einer rückstellfähigen Muffe (4) und wenigstens zwei Substraten, das die folgenden Schritte enthält:

(a) Anbringen einer Klammer (9), die wenigstens zwei langgestreckte äußere Schenkel (2) und einen langgestreckten inneren Schenkel (3) aufweist, an ein offenes Ende einer rückstellfähigen Muffe, wobei sich die äußeren Schenkel außerhalb der Muffe und der innere Schenkel innerhalb der Muffe befinden, so daß der innere Schenkel die Muffe in wenigstens zwei Leitungskanäle teilt, dadurch gekennzeichnet, daß wenigstens nach Rückstellung Teile der Muffe, die zwischen innerem Schenkel und jedem äußeren Schenkel verlaufen, im wesentlichen eben sind, wobei die Oberfläche des inneren Schenkels der Klammer wenigstens teilweise einen Klebstoff oder ein Dichtungsmaterial enthält;

(b) Anbringen des Substrates innerhalb der Kanäle; und

(c) Rückstellung der Muffe in Berührung mit den Substraten, um die gewünschte Dichtung herzustellen.

15. Verfahren nach Ansprüchen 13 oder 14, worin die Muffe wärmerückstellfähig ist und die Muffe in Schritt (c) erwärmt wird.

16. Verfahren nach einem der Ansprüche 13 bis 15, worin die Muffe ein Dichtungsmaterial oder einen Klebstoff auf einer inneren Oberfläche aufweist, und gegebenenfalls das Verfahren zusätzlich die Aktivierung des Dichtungsmaterials bzw. des Klebstoffs als Schritt (d) enthält.

17. Verfahren nach einem der Ansprüche 15 und 16, worin das Dichtungsmaterial oder der Klebstoff wärmeaktivierbar sind und in den Schritten (c) und (d) die Muffe erwärmt wird.

18. Verfahren nach einem der Ansprüche 13-17, worin die Substrate innerhalb der Muffe angeordnet werden, bevor die .Klammer angebracht wird.

19. Verfahren nach einem der Ansprüche 13-18, worin die Substrate Telekommunikationskabel sind.

20. Verfahren nach Anspruch 19, worin die Kabel eine Doppelummantelung aufweisen.

21. Verfahren nach einem der Ansprüche 19 oder 20, worin die Kabel einen Außendurchmesser von 10-15 mm aufweisen.

**Revendications**

1. Enveloppe pour une dérivation entre au moins quatre substrats, qui comprend:

(a) un manchon (4) doué de reprise de forme qui peut entourer la dérivation; et

(b) une attache (9) qui comprend au moins deux branches extérieures (2) et une branche intérieure qui a un rapport d'aspect (tel que défini ici) d'au moins 4:1, l'attache pouvant être positionnée sur une extrémité ouverte du manchon de façon que les branches extérieures soient à l'extérieur du manchon et que la branche intérieure soit à l'intérieur du manchon, caractérisée en ce que la largeur de la branche intérieure est telle que le positionnement de l'attache forme au moins deux conduits terminaux, avec au moins deux substrats dans un conduit, alignés sensiblement parallèlement à la largeur de l'attache, et au moins deux substrats dans l'autre conduit, alignés sensiblement parallèlement à la largeur de l'attache, et au moins après la reprise de forme, des parties du manchon, qui passent entre la branche intérieure et chacune desdites branches extérieures, sont sensiblement planes.

2. Enveloppe pour une dérivation entre au moins deux substrats, qui comprend:

(a) un manchon (4) doué de reprise de forme qui peut entourer la dérivation; et

(b) une attache (9) qui comprend au moins deux branches extérieures (2) et une branche intérieure (3), les branches extérieures et la branche intérieure étant disposées de façon que l'attache puisse être positionnée sur une extrémité ouverte du manchon, les branches extérieures étant à l'extérieur du manchon et la branche intérieure à l'intérieur du manchon, et la largeur de la branche intérieure étant telle qu'au moins deux conduits terminaux sont formés, caractérisée en ce qu'au moins après une reprise de forme, des parties du manchon qui passent entre la branche intérieure et chacune desdites branches extérieures sont sensiblement planes, au moins une partie de la surface de la branche intérieure de l'attache comprenant un adhésif ou une matière d'étanchéité.

3. Enveloppe selon l'une quelconque des revendications précédentes, dans laquelle le manchon est doué de reprise de forme à chaud.

4. Enveloppe selon l'une quelconque des revendications précédentes, dans laquelle le manchon est un manchon enroulé.

5. Enveloppe selon l'une quelconque des revendications précédentes, dans laquelle une surface intérieure du manchon porte un adhésif ou une matière d'étanchéité qui peut avantageusement être activé à chaud.

6. Enveloppe selon l'une quelconque des revendications précédentes, qui comprend en outre une doublure pouvant entourer et protéger mécaniquement les substrats et sur laquelle le manchon peut effectuer une reprise de forme.

7. Enveloppe selon l'une quelconque des revendications précédentes, dans laquelle le rapport d'aspect de la branche intérieure de l'attache est de 6:1 à 10:1.

8. Enveloppe selon l'une quelconque des revendications précédentes, dans laquelle la branche intérieure est plus longue que les branches extérieures.

9. Dérivation entre au moins deux substrats enveloppés par une enveloppe selon l'une quelconque des revendications précédentes.

10. Dérivation selon la revendication 9, dans laquelle les substrats sont des câbles de télécommunications.

11. Dérivation selon la revendication 10, dans laquelle les câbles sont des câbles à gaine double.

12. Dérivation selon la revendication 10 ou 11, dans laquelle les câbles ont un diamètre hors tout de 10-15 mm.

13. Procédé pour former une dérivation entre un manchon (4) doué de reprise de forme et au moins quatre substrats, qui consiste:

(a) à positionner une attache (9), ayant au moins deux branches allongées extérieures (2) et une branche allongée intérieure (3) présentant un rapport d'aspect d'au moins 4:1, sur une extrémité ouverte d'un manchon doué de reprise de forme de façon que les branches extérieures soient à l'extérieur du manchon et la branche intérieure à l'intérieur du manchon pour que la branche intérieure divise le manchon en au moins deux conduits, caractérisé en ce qu'au moins après la reprise de forme, des parties du manchon qui passent entre la branche intérieure et chacune desdites branches extérieures sont sensiblement planes;

(b) à positionner au moins deux substrats dans un conduit aligné sensiblement parallèlement à la largeur de l'attache, et au moins deux substrats dans un autre des conduits aligné sensiblement parallèlement à la largeur de l'attache; et

(c) à appliquer étroitement, par reprise de forme, le manchon contre les substrats pour former la fermeture étanche souhaitée.

14. Procédé pour former une dérivation entre un manchon (4) doué de reprise de forme et au moins deux substrats, qui consiste:

(a) à positionner une attache (9), ayant au moins deux branches allongées extérieures (2) et une branche allongée intérieure (3), sur une extrémité ouverte d'un manchon doué de reprise de forme de façon que les branches extérieures soient à l'extérieur du manchon et les branches intérieures à l'intérieur du manchon pour que la branche intérieure divise le manchon en au moins deux conduits, caractérisé en ce qu'au moins après la reprise de forme, des parties du manchon, qui passent entre la branche intérieure et chacune desdites branches extérieurs, sont sensiblement planes, au moins une partie de la surface de la branche intérieure de l'attache comprenant un adhésif ou une matière d'étanchéité;

(b) à positionner le substrat dans les conduits; et

(c) à appliquer étroitement, par reprise de forme, le manchon contre les substrats pour former la fermeture étanche souhaitée.

15. Procédé selon la revendication 13 ou 14, dans lequel le manchon est doué de reprise de forme à chaud et l'étape (c) consiste à chauffer le manchon.

16. Procédé selon l'une quelconque des revendications 13 à 15, dans lequel une surface intérieure du manchon comporte une matière d'étanchéité ou un adhésif et, si cela est nécessaire, le procédé consiste en outre (d) à activer la matière d'étanchéité ou l'adhésif.

17. Procédé selon les revendications 15 et 16, dans lequel la matière d'étanchéité ou l'adhésif peut être activé à chaud et les étapes (c) et (d) consistent à chauffer le manchon.

18. Procédé selon l'une quelconque des revendications 13-17, dans lequel les substrats sont positionnés à l'intérieur du manchon avant le positionnement de l'attache.

19. Procédé selon l'une quelconque des revendications 13-18, dans lequel les substrats sont des câbles de télécommunication.

20. Procédé selon la revendication 19, dans lequel les câbles sont des câbles à gaines doubles.

21. Procédé selon la revendication 19 ou 20, dans lequel les câbles ont un diamètre hors tout de 10-15 mm.

0 120 603

*Fig.1.*
PRIOR ART

*Fig.2.*
PRIOR ART

# Fig.3.

# Fig.4.

## Fig.5.

## Fig.6.

Fig.7.

Fig.8.